(19) Europäisches Patentamt
European Patent Office
Office européen des brevets

(11) **EP 3 060 771 B1**

(12) **FASCICULE DE BREVET EUROPEEN**

(45) Date de publication et mention de la délivrance du brevet:
**28.03.2018 Bulletin 2018/13**

(21) Numéro de dépôt: **14786854.1**

(22) Date de dépôt: **16.10.2014**

(51) Int Cl.:
***F01N 3/20*** *(2006.01)*

(86) Numéro de dépôt international:
**PCT/EP2014/072268**

(87) Numéro de publication internationale:
**WO 2015/059035 (30.04.2015 Gazette 2015/17)**

(54) **GESTION DE l'APRÈS-TRAITEMENT DES GAZ D'ÉCHAPPPEMENT ISSUS D'UN MOTEUR À COMBUSTION INTERNE**

STEUERUNG DER NACHBEHANDLUNG VON EINER BRENNKRAFTMASCHINE AUSGESTOSSENER ABGASE

TREATMENT CONTROL OF EXHAUST GAS EJECTED BY AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.10.2013 FR 1360382**

(43) Date de publication de la demande:
**31.08.2016 Bulletin 2016/35**

(73) Titulaire: **Renault S.A.S.**
**92100 Boulogne-Billancourt (FR)**

(72) Inventeurs:
• **RACHER, David**
**F-75005 Paris (FR)**
• **LOMBARDIN, Jacques Olivier**
**F-91600 Savigny sur Orge (FR)**
• **CERES, Aurélien**
**F-78114 Magny les Hameaux (FR)**

(56) Documents cités:
**DE-A1-102006 053 485    FR-A1- 2 839 743**
**JP-A- 2005 113 688    JP-A- 2010 223 041**
**US-A1- 2010 154 385    US-A1- 2011 047 971**

**Description**

L'invention concerne la gestion d'un ensemble de post-traitement des gaz d'échappement issus d'un moteur à combustion de véhicule automobile, par exemple un moteur Diesel, un moteur à allumage commandé, ou autre.

Le véhicule automobile peut par exemple être un véhicule thermique, un véhicule hybride, ou autre.

L'ensemble de post-traitement des gaz d'échappement peut être installé sur une ligne d'échappement d'un moteur à combustion, notamment un moteur Diesel. Cet ensemble peut permettre de réduire les émissions de produits polluants, notamment de monoxyde de carbone, d'hydrocarbones imbrûlés, de particules, de monoxydes d'azote, et de dioxyde d'azote.

Un ensemble de post-traitement peut comprendre un système de réduction catalytique des oxydes d'azote ou SCR (de l'anglais « Selective Catalytique Reduction »). Un tel système SCR permet de réduire les émissions d'oxyde d'azote ou $NO_x$, c'est-à-dire notamment les émissions de monoxyde d'azote (NO) et de dioxyde d'azote ($NO_2$), par réaction sur un pain catalytique, dit aussi pain SCR, avec de l'ammoniac (NH3).

Cet ammoniac est obtenu par une réaction hydrolytique d'une solution aqueuse, par exemple de l'urée, qui est injectée en amont du pain catalytique grâce à un injecteur.

Un système de réduction catalytique des oxydes d'azote comporte ainsi un réservoir pour stocker un fluide comprenant de l'ammoniac, par exemple de l'urée, un pain catalytique sur la ligne d'échappement pour retenir l'ammoniac issu du fluide contenu dans le réservoir afin de faire réagir cette ammoniac avec des oxydes d'azote issus du moteur à combustion. Un injecteur permet d'injecter de l'urée dans la ligne d'échappement, en amont du pain catalytique, et un circuit d'alimentation permet d'assurer le transfert du fluide du réservoir à l'injecteur.

Les oxydes d'azote réagissent au niveau du pain catalytique avec l'ammoniac fixé sur ce pain catalytique, de façon à former de l'eau et du diazote, ainsi éventuellement que des composés de type $N_yO_z$ par exemple NO, $NO_2$, $N_2O$ etc. On cherche à limiter l'émission de ces composés de type $N_yO_z$.

L'efficacité de traitement des oxydes d'azote $NO_x$ du système de réduction catalytique dépend de la température des gaz d'échappement au niveau du pain catalytique. Cette température dépend des conditions d'utilisation du moteur et est susceptible de varier au cours de la mission ou d'une mission à l'autre.

Il s'est avéré que l'efficacité de traitement des $NO_x$ est optimale lorsque la température est proche de 350 °C.

Afin de se rapprocher de cette température, le pain catalytique peut être installé relativement près de la sortie du moteur, par exemple à proximité d'un système de filtration de particules ou CSF (de l'anglais « Catalyzed Soot Filter »). Les pertes thermiques liées au chemin parcouru dans un conduit d'échappement restent ainsi relativement limitées.

Néanmoins, l'injecteur étant situé en amont du pain catalytique, il existe un risque de défaillance de l'injecteur si la température de cet injecteur dépasse une limite thermomécanique acceptable.

Plusieurs solutions ont été envisagées afin de refroidir l'injecteur.

Le document WO 2012/138373 décrit ainsi un circuit de refroidissement pour évacuer des calories au niveau de l'injecteur en faisant circuler autour de cet injecteur un liquide de refroidissement de type glycol. Ce système implique néanmoins un surcoût et une consommation de carburant accrue.

Le document US 2013/0014496 décrit un système avec un circuit de circulation d'air pour refroidir l'injecteur. Ce type de refroidissement peut néanmoins être relativement délicat à mettre en oeuvre, en particulier lorsque le pain catalytique est à proximité du filtre à particules, car ces filtres sont généralement placés dans le compartiment moteur, c'est-à-dire en dehors du flux d'air du véhicule.

On connaît aussi de la publication US-A1-2011/047971 un procédé de post-traitement des gaz d'échappement d'un moteur. Un système de dépollution comprend un catalyseur d'oxydation, un injecteur d'agent réducteur fournissant de l'ammoniac, un pain catalytique SCR, et un filtre à particules. Une pompe est contrôlée pour fournir l'ammoniac à un injecteur. Au démarrage, la pompe est désactivée pendant un laps de temps si l'ammoniac est gelé, et si la température de l'injecteur est trop élevée, le pompage est autorisé afin de refroidir l'injecteur.

Le document JP2010223041 décrit aussi un procédé de post-traitement des gaz d'échappement d'un moteur.

Il existe donc un besoin pour un refroidissement de l'injecteur permettant de concilier efficacité et simplicité.

Il est proposé un procédé de gestion d'un ensemble de post-traitement des gaz d'échappement issus d'un moteur à combustion de véhicule automobile, cet ensemble comprenant un système de réduction catalytique des oxydes d'azote des gaz d'échappement, ce système comprenant:

- un dispositif d'injection pour injecter un fluide comprenant de l'ammoniac dans une ligne d'échappement des gaz d'échappement,
- un pain catalytique, situé sur la ligne d'échappement, en aval du dispositif d'injection, pour stocker l'ammoniac issu de ce dispositif d'injection en vue d'une réaction avec les oxydes d'azote des gaz d'échappement.

Le procédé comprend :

- une étape de réception d'une valeur de température du dispositif d'injection et d'une valeur de température du fluide comprenant de l'ammoniac,
- une étape de calcul d'une valeur de quantité de fluide, en fonction des valeurs de température reçues et en fonction d'une valeur de température de dispositif d'injection souhaitée, et
- une étape de génération d'un signal de commande destiné à un dispositif de contrôle du dispositif d'injection, pour commander l'injection de la quantité de fluide calculée afin que la température du dispositif d'injection atteigne la température souhaitée.

Le procédé est caractérisé en ce qu'il comprend en outre une étape d'estimation d'au moins un paramètre de réglage du moteur en fonction de la valeur calculée de quantité de fluide à injecter. Ainsi, plutôt que de calculer la quantité du fluide à injecter en fonction de la quantité d'oxyde d'azote présente dans les gaz d'échappement, on inverse la loi de commande pendant cette phase de sur-injection. Le débit de fluide, nécessaire au refroidissement, devient la grandeur imposée. Le débit de dioxyde d'azote peut devenir la grandeur d'ajustement de façon à atteindre la stoechiométrie des réactions chimiques qui s'effectuent au niveau du pain catalytique.

Ainsi, plutôt que de refroidir le dispositif d'injection, ou injecteur, en faisant circuler un fluide de refroidissement du type glycol, on sur-injecte du liquide comprenant de l'ammoniac, par exemple de l'urée. Dit autrement, on utilise l'urée comme liquide calorifique pour refroidir le dispositif d'injection.

Ce procédé peut ainsi permettre de refroidir le dispositif d'injection, de façon relativement simple et peu coûteuse, le pain catalytique pouvant alors être installé relativement près du moteur, par exemple à proximité du filtre à particules.

La quantité de fluide peut par exemple être une masse, un débit massique, un nombre de moles, un volume, un débit volumique, ou autre.

L'invention n'est en rien limitée par la façon dont la valeur de quantité de fluide est calculée.

Par exemple, la valeur de température du fluide et/ ou la valeur de température du dispositif d'injection peu(ven)t être mesurée(s).

Dans un mode de réalisation avantageux, la valeur de température du fluide, par exemple de l'urée, peut être mesurée par un capteur de température.

Avantageusement et de façon non limitative, la température du dispositif d'injection peut être estimée à partir d'un bilan thermodynamique du dispositif d'injection, par exemple en se basant sur l'équation ci-dessous :

$$T\_inj\,(t) = \int_{t0}^{t} \frac{\Phi\_inj + \Phi\_urée - \Phi\_env}{Cp\_inj}\,dt \;+\; T\_0$$

dans laquelle

T_inj représente la valeur de la température du dispositif d'injection,
Φ_inj représente une valeur de flux thermique de convection entre le gaz d'échappement et le dispositif d'injection,
Φ_urée représente une valeur du flux thermique apporté par la circulation de l'urée dans le dispositif d'injection,
Φ_env représente une valeur du flux thermique de convection entre le dispositif d'injection et l'environnement,
Cp_inj représente une valeur de capacité calorifique du dispositif d'injection, et
T_O représente une valeur de température du dispositif d'injection à l'initialisation du calcul.

Le flux thermique de convection gaz-injecteur Φ_inj peut s'écrire suivant la formule :

$$\Phi\_inj = h\_gaz * S\_inj * (T\_gaz - T\_inj)$$

dans lequel h_gaz représente une valeur de coefficient de convection entre le gaz d'échappement et le dispositif d'injection,
S_inj représente une valeur de surface du dispositif d'injection en contact avec le gaz d'échappement,
T_gaz représente une valeur de température des gaz d'échappement au niveau du dispositif d'injection.

Le flux thermique lié à la circulation de l'urée dans le dispositif d'injecteur peut par exemple s'écrire :

$$\Phi\_urée = M\_urée * Cp\_urée * T\_urée$$

dans lequel

M_urée représente une valeur de débit d'urée,
Cp_urée représente une valeur de capacité calorifique de l'urée, et
T_urée représente une valeur de température de l'urée au niveau du dispositif d'injection.

Enfin, le flux thermique de convection entre le dispositif d'injection et l'environnement peut s'écrire suivant :

$$\Phi\_env = h\_env * S\_inj2 * (T\_inj - T\_env)$$

dans lequel
h_env représente une valeur de coefficient de convection entre le dispositif d'injection et l'environnement extérieur.
S_inj2 représente une valeur de surface du dispositif d'injection en contact avec l'extérieur.
T_env représente une valeur de température extérieure.
Dans un mode de réalisation avantageux, plutôt que d'utiliser les formules ci-dessus à chaque réalisation du procédé décrit ci-dessus, on pourra prévoir un recours à une cartographie.
Le procédé peut avantageusement comprendre une étape consistant à calculer une valeur de différence de température ∆T du dispositif d'injection, entre la température du dispositif d'injection, par exemple la température du dispositif d'injection ainsi estimée T_inj, et la valeur de température souhaitée T1.
Dans un mode de réalisation, on pourra prévoir d'estimer une quantité d'urée à injecter en utilisant la formule ci-dessous :

$$M\_inj * Cp\_inj * (T\_inj - T1)$$
$$= Qte\_urée * Cp\_urée * (T\_inj - T\_urée)$$

Dans lequel
M_inj représente une valeur de masse de l'injecteur,
Cp_inj représente une valeur de capacité calorifique de l'injecteur,
Qte_urée représente une quantité d'urée injectée.
Alternativement, plutôt que d'effectuer un tel calcul, on pourra avoir recours à une cartographie. Par exemple, on pourra lire dans une cartographie une valeur de quantité de fluide à injecter correspondant à la valeur de différence de température ∆T et la valeur de la température de l'urée T_urée.
Avantageusement et de façon non limitative, le procédé peut comprendre en outre une étape consistant à comparer la température de l'injecteur du dispositif d'injection à au moins un seuil. L'injection du surplus d'urée n'est autorisée que si cette température est supérieure à ce seuil.
Avantageusement, on pourra prévoir de mettre en place une hystérésis, avec deux seuils de température, afin de stabiliser les commandes de sur-injection.
Avantageusement et de façon non limitative, on peut d'abord prévoir d'estimer une quantité d'oxydes d'azote en fonction de la quantité de fluide calculée ci-dessus, puis d'évaluer cet au moins un paramètre de réglage moteur en fonction de la quantité d'oxydes d'azote ainsi estimée.
Avantageusement et de façon non limitative, on peut estimer la quantité d'oxydes d'azote en fonction en outre des coefficients stoechiométriques d'au moins une réaction entre les oxydes d'azote et l'ammoniac attendue au niveau du pain catalytique.
Les réactions susceptibles de se produire sur le pain catalytique étant fonctions notamment de la température et de la composition des oxydes d'azote, cette estimation peut être fonction en outre de la valeur des températures au niveau du pain catalytique, et de valeurs de quantité d'oxydes d'azote dans la ligne d'échappement, qui peuvent par exemple être mesurées par un capteur d'oxydes d'azote..
Avantageusement et de façon non limitative, cet au moins un paramètre de réglage moteur peut par exemple comprendre une valeur de quantité de gaz d'échappement recirculés à l'échappement, dits EGR (de l'anglais « Exhaust Gaz Recirculation »). Cette quantité de gaz d'échappement recirculés peut par exemple être un débit, une masse ou autre. De ce paramètre peut dépendre la quantité des oxydes d'azote produits par le moteur.
Avantageusement et de façon non limitative, cet au moins un paramètre de réglage moteur peut comprendre une valeur d'avance à l'injection.
La quantité de gaz d'échappement recirculés peut permettre de modifier relativement lentement, mais de façon substantielle, les émissions d'oxyde d'azote alors que la valeur d'avance à l'injection peut permettre de modifier rapidement mais relativement légèrement, ces émissions d'oxyde d'azote.

L'invention n'est en rien limitée à ces exemples de paramètres de réglage moteur. On pourra par exemple citer le volet de swirl, la suralimentation, ou autre.

Dans un mode de réalisation, le dispositif d'injection est en outre refroidi par la circulation d'air.

Il est en outre proposé un produit programme d'ordinateur comprenant des instructions pour effectuer les étapes du procédé décrit ci-dessus lorsque ces instructions sont exécutées par un processeur. Ce programme peut être stocké sur un support mémoire, téléchargé, ou autre.

Il est en outre proposé un dispositif de gestion d'un ensemble de post-traitement des gaz d'échappement issus d'un moteur à combustion de véhicule automobile, cet ensemble comprenant un système de réduction catalytique des oxydes d'azote des gaz d'échappement, ce système comprenant :

- un dispositif d'injection pour injecter un fluide comprenant de l'ammoniac sur une ligne d'échappement pour la circulation des gaz d'échappement, et
- un pain catalytique, situé sur la ligne d'échappement, en aval du dispositif d'injection pour stocker l'ammoniac issu de ce dispositif d'injection en vue d'une réaction avec les oxydes d'azote et gaz d'échappement.

Le dispositif de gestion comprend :

- des moyens de réception d'une valeur de température du dispositif d'injection et d'une valeur de température du fluide,
- des moyens de traitement agencés pour calculer une valeur de quantité de fluide à injecter, en fonction des valeurs de température reçues et en fonction d'une valeur de température du dispositif d'injection souhaitée, et
- des moyens de transmission pour transmettre un signal de commande destiné à un dispositif de contrôle du dispositif d'injection afin de commander l'injection de cette quantité de fluide ainsi calculée pour que la température du dispositif d'injection se rapproche de la température souhaitée.

Ce dispositif de gestion peut par exemple comprendre ou être intégré dans un ou plusieurs processeurs, par exemple un microcontrôleur, un microprocesseur ou autre.

Les moyens de réception peuvent par exemple comprendre une broche d'entrée, un port d'entrée ou autre.

Les moyens de transmission peuvent par exemple comprendre une broche de sortie, un port de sortie, ou autre.

Les moyens de traitement peuvent par exemple comprendre un coeur de processeur ou CPU (de l'anglais « Central Processing Unit ») ou autre.

Il est en outre proposé un système de réduction catalytique des oxydes d'azote des gaz d'échappement issus d'un moteur à combustion de véhicule automobile, ce système comprenant

- un dispositif d'injection pour injecter un fluide comprenant de l'ammoniac sur une ligne d'échappement pour la circulation des gaz d'échappement,
- un pain catalytique destiné à être situé sur la ligne d'échappement en aval du dispositif d'injection pour retenir l'ammoniac issu de ce dispositif d'injection en vue d'une réaction avec les oxydes d'azote des gaz d'échappement, et
- un dispositif de gestion tel que décrit ci-dessus.

Il est en outre proposé un ensemble de post-traitement des gaz d'échappement issus d'un moteur à combustion de véhicule automobile, cet ensemble comprenant le système décrit ci-dessus, ainsi qu'au moins un autre système de dépollution, par exemple un filtre à particules.

Enfin il est proposé un véhicule automobile, par exemple un véhicule thermique ou éventuellement hybride, comprenant un moteur thermique et l'ensemble de post-traitement décrit ci-dessus.

L'invention sera mieux comprise en référence aux figures lesquelles illustrent des modes de réalisation non limitatifs et donnés à titre d'exemple.

La figure 1 montre schématiquement un moteur et un exemple d'ensemble de post-traitement selon un mode de réalisation de l'invention.

La figure 2 illustre schématiquement une partie d'un exemple de dispositif de gestion selon un mode de réalisation de l'invention.

Les figures 3A, 3B, 3C, 3D et 3E sont des graphiques avec, en abscisse le temps, et en ordonnée, respectivement, la température de l'injecteur, le signal de requête de sur-injection Sur_injection, un débit de sur-injection, un débit de sur-injection consolidé et une quantité d'ammoniac en aval du pain catalytique.

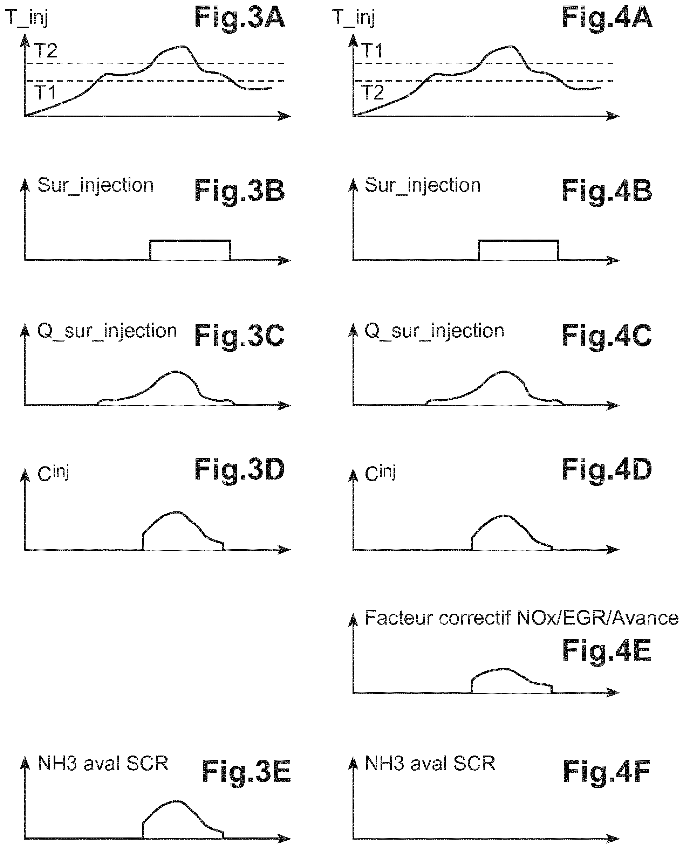

Les figures 3A, 3B, 3C, 3D et 3E sont relatives à un refroidissement par sur-injection d'urée, sans adaptation des réglages moteur.

Les figures 4A, 4B, 4C, 4D, 4E et 4F sont des graphiques avec en abscisse le temps, et en ordonnée respectivement la température du dispositif d'injection T_inj, un signal de requête de sur-injection Sur_injection, un débit de sur-injection, un débit de sur-injection consolidé, un facteur correctif à appliquer au réglage moteur, et une quantité d'ammoniac mesurée en aval du système de post-traitement. Les figures 4A à 4F sont relatives au refroidissement par sur-injection d'urée et correction des émissions d'oxydes d'azote en amont du pain catalytique, en corrigeant les réglages moteur.

Ces différentes graphiques montrent des allures de courbes, à des fins explicatives, et les unités ne sont pas représentées.

Des références identiques pourront être utilisées d'une figure à l'autre pour désigner des éléments identiques ou similaires par leur forme ou dans leur fonction.

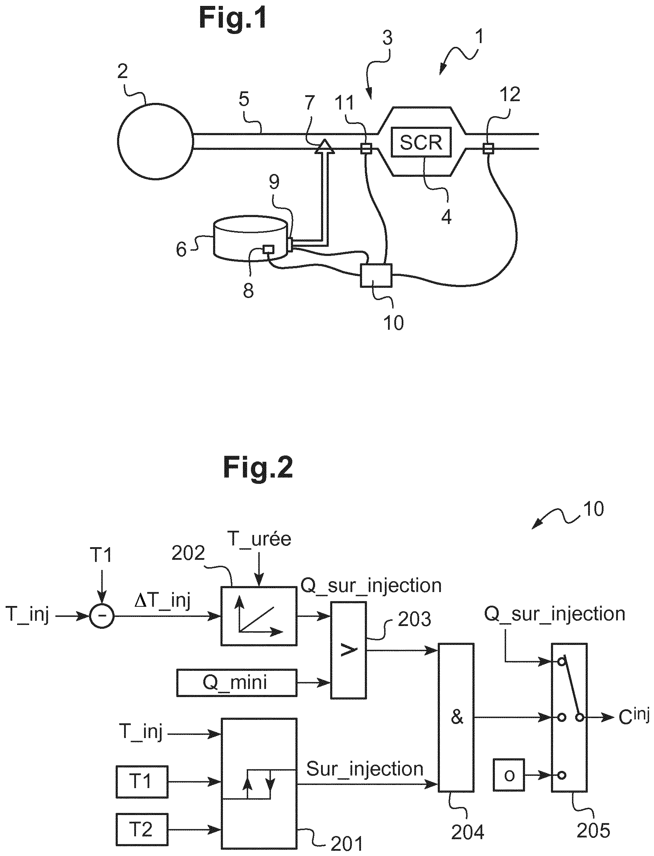

En référence à la figure 1, un ensemble de post-traitement 1 des gaz d'échappement issus d'un moteur Diesel 2 comprend, outre des systèmes de dépollution non représentés, comme par exemple un filtre à particules ou autre, un système de réduction catalytique des oxydes d'azote 3. Ce système 3 comprend un pain catalytique 4 disposé sur une ligne d'échappement 5 dédiée à la circulation des gaz d'échappement issus du moteur 2, un réservoir d'urée 6, et un injecteur 7 pour injecter de l'urée sur la ligne d'échappement en amont du pain catalytique 4.

Un capteur de température 8 permet de mesurer une valeur de température de l'urée. Ce capteur est raccordé par un fil électrique à un dispositif de gestion 10, par exemple un microcontrôleur, un microprocesseur ou autre. Ce dispositif de gestion 10 est apte à envoyer des signaux de commande à une pompe 9 permettant de prélever de l'urée du réservoir 6 pour injecter de l'urée via l'injecteur 7 sur la ligne d'échappement 5.

Un capteur de température 11 permet d'obtenir une valeur de température des gaz d'échappement légèrement en amont du pain catalytique 4, et cette valeur peut également être reçue par le dispositif de gestion 10.

Le processeur 10 est en outre en communication avec un capteur d'oxydes d'azote 12 capable de mesurer une quantité d'oxydes d'azote présents en aval du pain catalytique 4.

Le pain catalytique 4 est relativement proche du moteur 2. En particulier, le pain catalytique 4 peut être situé à proximité d'un filtre à particules non représenté. Ainsi la température au niveau du pain catalytique 4 peut-elle être relativement élevée, ce qui permet d'obtenir une meilleure efficacité de réaction entre les oxydes d'azote et l'ammoniac, et donc de limiter ainsi les résidus d'oxyde d'azote produits.

Toutefois, l'injecteur 7 étant en amont du pain catalytique 4, il importe de limiter la température de cet injecteur dans une plage raisonnable, afin d'éviter toute défaillance.

Outre un circuit de circulation d'air non représenté, on prévoit de refroidir cet injecteur 7 en injectant une quantité d'urée supérieure à ce qui serait normalement attendu pour un fonctionnement moteur traditionnel. Dit autrement, on calcule une quantité d'urée à injecter pour réduire la température de l'injecteur 7, l'urée jouant ici le rôle de fluide de refroidissement.

Ce calcul est effectué en fonction de la température de l'injecteur, cette température étant estimée comme décrit ci-après, de la température mesurée de l'urée dans le réservoir, et d'une valeur de température souhaitée.

Plus précisément, le dispositif de gestion 10 est programmé pour estimer la température de l'injecteur. Cette température est calculée en effectuant un bilan thermodynamique de fluides thermiques principaux au niveau de l'injecteur : un flux thermique de convection gaz-injecteur $\Phi\_inj$, un flux thermique de convection entre l'injecteur et l'environnement $\Phi\_env$, et un flux thermique apporté par la circulation de l'urée de l'injecteur $\Phi\_urée$.

Le flux thermique de convection gaz-injecteur $\Phi\_inj$ peut s'écrire:

$$\Phi\_inj = h\_gaz * S\_inj * (T\_gaz - T\_inj)$$

dans lequel h_gaz représente une valeur de coefficient de convection entre le gaz d'échappement et l'injecteur,

S_inj représente une valeur de surface de l'injecteur en contact avec le gaz d'échappement,
T_gaz représente une valeur mesurée de température des gaz d'échappement au niveau de l'injecteur.

Le flux thermique de convection entre l'injecteur et l'environnement $\Phi\_env$ peut s'écrire :

$$\Phi\_env = h\_env * S\_inj2 * (T\_inj - T\_env)$$

dans lequel h_env représente une valeur de coefficient de convection entre l'injecteur et l'environnement extérieur. La valeur de ce coefficient dépend de la vitesse du véhicule et peut être estimée par des essais préalables.

S_inj2 représente une valeur de surface de l'injecteur en contact avec l'extérieur. Cette valeur est supposée connue.

T_env représente une valeur de température extérieure. Cette valeur peut être mesurée par un capteur de température présent sur le véhicule.

Enfin le flux thermique apporté par la circulation de l'urée de l'injecteur Φ_urée peut s'écrire :

$$\Phi\_urée = M\_urée * Cp\_urée * T\_urée$$

dans lequel M_urée représente une valeur de débit d'urée, cette valeur étant connue car imposée par la pompe ou bien encore mesurée,

Cp_urée représente une valeur de capacité calorifique de l'urée, cette valeur étant supposée connue, et
T_urée représente une valeur de température de l'urée au niveau du dispositif d'injection. Cette valeur est mesurée par le capteur présent dans le réservoir.

On peut estimer la température de l'injecteur en appliquant la formule ci-dessous :

$$T\_inj\,(t) = \int_{t0}^{t} \frac{\Phi\_inj + \Phi\_urée - \Phi\_env}{Cp\_inj}\ dt\ +\ T\_0$$

Dans laquelle
Cp_inj représente une valeur de capacité calorifique du dispositif d'injection, et
T_O représente une valeur de température du dispositif d'injection à l'initialisation du calcul, par exemple une température estimée du dispositif d'injection.

Les valeurs de paramètres h_gaz, S_inj et Cp_inj sont connues pour un modèle d'injecteur donné.

A chaque instant (suivant un pas d'échantillonnage prédéterminé), à partir de la valeur correspondante de la température d'injecteur T_inj, le dispositif de gestion 10 calcule et une quantité d'urée à injecter pour ramener la température de l'injecteur à une valeur de température souhaitée T1.

L'urée injectée, de par son débit, ses capacités calorimétriques et son cheminement dans l'injecteur fait office de liquide de refroidissement. La commande de débit d'urée est réalisée grâce à une loi implémentée dans le calculateur de contrôle moteur 10.

Une loi de contrôle vient définir le besoin en refroidissement de l'injecteur et le débit d'urée nécessaire pour évacuer des calories de l'injecteur. Cette loi est programmée dans les calculateurs de contrôle moteur 10.

D'une part, on définit lorsqu'un refroidissement de l'injecteur nécessaire. Ainsi, la valeur de température de l'injecteur T_inj estimée est comparée à deux seuils T1, T2 selon un cycle d'hystérésis. Un signal Sur_injection prend une valeur égale à 1, seulement lorsque cette température est passée au-dessus de la valeur T2, T2 étant supérieure à T1, et tant que cette valeur de température reste supérieure à la valeur T1.

En référence à la figure 2, ces étapes de comparaisons impliquant une hystérésis sont réalisées dans un module 201 du dispositif de gestion 10.

Les figures 3A, 3B, 4A et 4B montrent ainsi comment le signal de requête de sur-injection Sur_injection a une valeur nulle tant que la température estimée de l'injecteur T1 est plus faible la valeur de température T2, et également lorsque la valeur de température de l'injecteur passe en-dessous de la valeur T1.

D'autre part, on définit le débit d'urée nécessaire pour assurer le refroidissement de l'injecteur. Ce débit est calculé en effectuant un bilan thermodynamique au niveau de l'injecteur.

On calcule dans un premier temps une valeur de dépassement thermique c'est-à-dire une différence entre la température de l'injecteur T_inj et le seuil de température T1. Puis on associe à cet écart de température une valeur de débit d'urée Q_sur_injection permettant d'absorber les calories non souhaitées. Cette valeur de débit d'urée peut être obtenue en équilibrant les lois d'énergie entre l'urée et l'injecteur.

La valeur P_inj des calories excédentaires dans l'injecteur peut en effet s'écrire :

$$P\_inj = M\_inj * Cp\_inj * (T\_inj\text{-}T1)$$

Dans lequel

M_inj représente une valeur de masse de l'injecteur,

Cp_inj représente une valeur de capacité calorifique de l'injecteur.

La valeur P_urée des calories évaluée par l'urée peut s'écrire :

$$P\_urée = Qte\_urée * Cp\_urée * (T\_inj - T\_urée)$$

Dans lequel Qte_urée représente une valeur de quantité d'urée injectée,

La température de l'urée T_urée est mesurée par le capteur référencé 8 sur la figure 1, et la température de l'injecteur T_inj a été estimée précédemment.

Les échanges des flux entre l'urée et l'injecteur n'étant pas forcément parfaits, le recours à une cartographie peut permettre de s'affranchir des phénomènes d'ordre 2, moyennant une calibration judicieuse

En référence à la figure 2, on pourra ainsi prévoir une cartographie, référencée 202 permettant d'associer une valeur de débit de sur-injection Q_sur_injection à une valeur de dépassement thermique $\Delta T$ et une valeur de température de l'urée T_urée.

Un comparateur 203 permet de prendre en compte uniquement les valeurs de débit de sur-injection supérieures à une valeur minimale Q_mini.

Une porte ET 204 reçoit le signal de requête de sur-injection Sur_injection et le signal issu de ce comparateur 203.

Un signal de consigne C$^{inj}$ destiné à un dispositif de contrôle du dispositif d'injection, par exemple la pompe 9, est élaboré au moyen d'un module 205.

Ce module peut par exemple permettre de sélectionner plusieurs modes de fonctionnement. Dans un de ces modes de fonctionnement, tel qu'illustré sur la figure 2, le signal de consigne C$^{inj}$ est choisi égal à la valeur de débit de sur-injection Q_sur_injection. Dans un autre mode de fonctionnement, le signal de consigne C$^{inj}$ est choisi égal au signal issu de la porte ET 204. Enfin, dans un troisième mode de fonctionnement, le signal C$^{inj}$ venant piloter une sur-injection d'urée est choisi nul, c'est-à-dire que l'injection d'urée est effectuée en calculant la quantité d'urée nécessaire en fonction d'une valeur de quantité d'oxyde d'azote mesurée, et non en fonction d'une valeur de température d'injecteur souhaitée.

Les figures 3C et 4C montrent des valeurs de débit de sur-injection ainsi calculées et les figures 3D et 4D montrent des valeurs de consigne C$^{inj}$ ainsi obtenues.

Toutefois, comme représenté sur la figure 3E, si un surplus d'urée est injecté, il existe un risque pour que de l'ammoniac s'échappe de la ligne d'échappement. En effet, l'ammoniac est excédentaire par rapport à la quantité d'oxyde d'azote à transformer.

Dans un mode de réalisation avantageux, correspondant aux figures 4$^E$ et 4F, afin d'éviter de telles fuites à l'échappement de gaz nocifs, on prévoit d'adapter le réglage du moteur en fonction de la quantité d'urée sur-injectée En effet les équations chimiques de réaction des oxydes d'azote et de l'ammoniac au niveau du pain catalytique sont les suivantes :

$$4 \cdot NO + O_2 + 4 \cdot NH_3 \Rightarrow 4 \cdot N_2 + 6 \cdot H_2O,$$

cette réaction s'effectuant pour une température supérieure à 250°C,

$$NO + NO_2 + 2 \cdot NH_3 \Rightarrow 2 \cdot N_2 + 3 \cdot H_2O,$$

cette réaction s'effectuant pour une température supérieure à 200°C et

$$6 \cdot NO_2 + 8 \cdot NH_3 \Rightarrow 7 \cdot N_2 + 12 \cdot H_2O$$

cette réaction s'effectuant pour une température supérieure à 250°C.

Dans l'art antérieur, la quantité d'urée est définie en mesurant les émissions d'oxyde d'azote et en cherchant à atteindre la stoechiométrie dans les équations ci-dessus, l'objectif étant de traiter la quantité maximale d'oxyde d'azote afin de respecter les normes anti-pollution. Le débit d'oxyde d'azote en amont du pain catalytique est imposé par le réglage du moteur, et donc par les conditions d'utilisation du conducteur, et le débit d'urée est ajusté à la quantité d'oxydes d'azote produits.

Lorsque le procédé décrit ci-dessus est appliqué, du fait de la sur-injection d'urée, ces équations chimiques risquent d'être déséquilibrées à cause de l'excès d'ammoniac par rapport aux molécules d'oxyde d'azote. Cet ammoniac excédentaire peut être largué à l'échappement.

Afin d'éviter ce relargage d'ammoniac à l'échappement, on prévoit de commander durant cette phase de sur-injection le débit d'urée, c'est-à-dire que l'ammoniac devient la grandeur imposée. Le débit d'oxyde d'azote devient une grandeur d'ajustement afin d'atteindre la stoechiométrie, et donc la réduction de l'ammoniac et des oxydes d'azote.

Cette loi de commande peut être implémentée dans le dispositif de gestion 10. Un premier calcul est effectué pour estimer le facteur correctif à appliquer sur les oxydes d'azote en amont du pain catalytique afin d'atteindre la stoechiométrie NOx/NH$_3$, et ceci en fonction :

- des équations de réaction chimique entre monoxyde d'azote, d'oxyde d'azote et ammoniac transcrites en tables,
- de la quantité d'urée sur-injectée, c'est-à-dire des excès d'ammoniac,
- de la quantité de dioxyde d'azote mesurée en amont du pain catalytique par un capteur, c'est-à-dire déficit d'oxyde d'azote, et
- de paramètres influents pertinents de le la réaction chimique, notamment la température, le débit.

Ce premier calcul permet d'estimer un facteur correctif à partir duquel on évalue un signal pour piloter la quantité de gaz d'échappement recirculés ou EGR et un signal pour piloter l'avance à l'injection dans le moteur.

La correction de ces réglages moteurs (EGR ou avance à l'injection) peut être définie par l'écart séparant la mesure d'émission d'oxydes d'azote et la consigne souhaitée afin d'atteindre la stoechiométrie avec l'ammoniac.

Ces facteurs correctifs sur les consignes d'avance à l'injection et de taux EGR, sont ensuite appliquées pour faire de façon à augmenter la quantité d'oxyde d'azote à la sortie du moteur, et donc en amont du pain catalytique. Ces facteurs correctifs peuvent être définis par des cartographies. Ces cartographies peuvent faire intervenir d'autres paramètres moteur comme la température ou autre.

De telles corrections n'étant parfois pas souhaitables, selon le cas de fonctionnement, ces corrections pourront être arbitrées. Ces corrections peuvent être appliquées sur d'autres composants moteur permettant l'augmentation de la quantité d'oxyde d'azote produit en amont du pain catalytique, par exemple la suralimentation ou le volet de swirl.

La figure 4E montre un exemple de facteur correctif EGR ainsi calculé en fonction du temps.

Comme il ressort de la figure 4F, lorsque les réglages moteurs sont ainsi adaptés à la quantité d'ammoniac présente sur le pain catalytique, aucune fuite d'ammoniac en aval du pain catalytique n'est détectée.

En variante, on pourrait pouvoir contrôler les émissions d'oxyde d'azote via une estimation de la quantité d'oxyde d'azote construite à partir d'une information de précieux cylindre, c'est-à-dire sans sonde à oxyde d'azote.

## Revendications

**1.** Procédé de gestion d'un ensemble de post-traitement des gaz d'échappement issus d'un moteur à combustion de véhicule automobile, ledit ensemble comprenant un système de réduction catalytique des oxydes d'azote des gaz d'échappement, ledit système comprenant un dispositif d'injection pour injecter un fluide comprenant de l'ammoniac dans une ligne d'échappement des gaz d'échappement, et un pain catalytique, situé sur la ligne d'échappement, en aval du dispositif d'injection, pour stocker l'ammoniac issu dudit dispositif d'injection en vue d'une réaction avec les oxydes d'azote des gaz d'échappement, le procédé comprenant :

- une étape de réception d'une valeur de température du dispositif d'injection (T_inj) et d'une valeur de température du fluide comprenant de l'ammoniac (T_urée),
- une étape de calcul d'une valeur de quantité de fluide (Q_sur_injection), en fonction des valeurs de température reçues et en fonction d'une valeur de température de dispositif d'injection souhaitée (T1), et
- une étape de génération d'un signal de commande (C$^{inj}$) destiné à un dispositif de contrôle du dispositif d'injection, pour commander l'injection de la quantité de fluide calculée afin que la température du dispositif d'injection atteigne la température souhaitée,

**CARACTERISE EN CE QU'**
il comprend en outre une étape d'estimation d'au moins un paramètre de réglage du moteur en fonction de la valeur de quantité de fluide calculée, et **en ce que**
l'étape de calcul de la valeur de quantité de fluide est menée en effectuant un bilan thermodynamique au niveau du dispositif d'injection.

**2.** Procédé selon la revendication 1, comprenant

- une étape d'estimation d'une quantité d'oxydes d'azote en fonction de la quantité de fluide calculée et des coefficients stoechiométriques d'au moins une réaction entre les oxydes d'azote et l'ammoniac attendue au niveau du pain catalytique, et

- une étape d'évaluation dudit au moins un paramètre de réglage moteur en fonction de la quantité d'oxydes d'azote ainsi estimée.

**3.** Procédé selon l'une quelconque des revendications 1 ou 2, dans lequel ledit au moins un paramètre de réglage du moteur comprend une quantité de gaz d'échappement recirculés à l'admission et une avance à l'injection.

**4.** Procédé selon l'une quelconque des revendications 1 à 3, dans lequel la température du dispositif d'injection (T_inj) est estimée à partir d'un bilan thermodynamique du dispositif d'injection.

**5.** Procédé selon l'une quelconque des revendications 1 à 4, comprenant :

- une étape de calcul d'une valeur de différence de température (∆T) du dispositif d'injection, entre la température du dispositif d'injection (T_inj), et la valeur de température souhaitée (T1), et
- une étape de lecture dans une cartographie d'une valeur de quantité de fluide (Q_sur_injection) correspondant à la valeur de différence de température (∆T) et la valeur de la température de l'urée (T_urée).

**6.** Procédé selon l'une quelconque des revendications 1 à 4, comprenant :

- une étape de calcul d'une valeur de différence de température (∆T) du dispositif d'injection, entre la température du dispositif d'injection (T_inj), et la valeur de température souhaitée (T1),
et dans lequel
la valeur de quantité de fluide est estimée en utilisant la formule

$$M\_inj * Cp\_inj * (T\_inj - T1)$$
$$= Qte\_urée * Cp\_urée * (T\_inj - T\_urée)$$

dans lequel

M_inj représente une valeur de masse du dispositif d'injection,
Cp_inj représente une valeur de capacité calorifique du dispositif d'injection,
T_inj représente la valeur de température du dispositif d'injection reçue,
T1 représente la valeur de température souhaitée,
Qte_urée représente une quantité de fluide comprenant de l'ammoniac,
Cp_urée représente une valeur de capacité calorifique du fluide comprenant de l'ammoniac, et
T_urée représente la valeur de température du fluide comprenant de l'ammoniac reçue.

**7.** Procédé selon l'une quelconque des revendications 1 à 6, comprenant en outre une étape consistant à comparer la température du dispositif d'injection (T_inj) à au moins un seuil (T1, T2), et dans lequel l'injection d'un surplus de fluide est autorisée seulement si ladite température est supérieure audit seuil.

**Patentansprüche**

**1.** Verfahren zum Management einer Anordnung zur Nachbehandlung der von einem Verbrennungsmotor eines Kraftfahrzeugs ausgestoßenen Abgase, wobei die Anordnung ein System zur katalytischen Reduktion der Stickoxide der Abgase umfasst, wobei dieses System eine Einspritzvorrichtung zum Einspritzen eines Ammoniak umfassenden Fluids in einen Abgasstrang der Abgase und einen Katalysatorblock, der sich im Abgasstrang stromabwärts der Einspritzvorrichtung befindet, um den von der Einspritzvorrichtung stammenden Ammoniak zwecks einer Reaktion mit den Stickoxiden der Abgase zu speichern, umfasst, wobei das Verfahren umfasst:

- einen Schritt des Empfangs eines Temperaturwertes der Einspritzvorrichtung (T_inj) und eines Temperaturwertes des Ammoniak umfassenden Fluids (T_urée),
- einen Schritt der Berechnung eines Fluidmengenwertes (Q_sur_injection) in Abhängigkeit von den empfangenen Temperaturwerten und in Abhängigkeit von einem gewünschten Temperaturwert der Einspritzvorrichtung (T1), und
- einen Schritt der Erzeugung eines Steuersignals (C$^{inj}$) das für eine Steuervorrichtung der Einspritzvorrichtung bestimmt ist, um die Einspritzung der berechneten Fluidmenge zu steuern, damit die Temperatur der Einspritzvorrichtung die gewünschte Temperatur erreicht,

**dadurch gekennzeichnet, dass**
es außerdem einen Schritt der Schätzung wenigstens eines Regelungsparameters des Motors in Abhängigkeit von dem berechneten Fluidmengenwert umfasst, und dadurch, dass
der Schritt der Berechnung des Fluidmengenwertes ausgeführt wird, indem eine thermodynamische Bilanz an der Einspritzvorrichtung erstellt wird.

2. Verfahren nach Anspruch 1, welches umfasst:

- einen Schritt der Schätzung einer Menge an Stickoxiden in Abhängigkeit von der berechneten Fluidmenge und den stöchiometrischen Koeffizienten wenigstens einer Reaktion zwischen den Stickoxiden und dem Ammoniak, die an dem Katalysatorblock zu erwarten ist,
- einen Schritt der Ermittlung des wenigstens einen Motorregelungsparameters in Abhängigkeit von der so geschätzten Menge an Stickoxiden.

3. Verfahren nach einem der Ansprüche 1 oder 2, wobei der wenigstens eine Regelungsparameter des Motors eine Menge der zum Einlass rückgeführten Abgase und eine Einspritzvoreilung umfasst.

4. Verfahren nach einem der Ansprüche 1 bis 3, wobei die Temperatur der Einspritzvorrichtung (T_inj) ausgehend von einer thermodynamischen Bilanz der Einspritzvorrichtung geschätzt wird.

5. Verfahren nach einem der Ansprüche 1 bis 4, welches umfasst:

- einen Schritt der Berechnung eines Temperaturdifferenzwertes ($\Delta$T) der Einspritzvorrichtung zwischen der Temperatur der Einspritzvorrichtung (T_inj) und dem gewünschten Temperaturwert (T1), und
- einen Schritt des Ablesens eines Fluidmengenwertes (Q_sur_injection), der dem Temperaturdifferenzwert ($\Delta$T) und dem Wert der Temperatur des Harnstoffs (T_urée) entspricht, aus einem Kennfeld.

6. Verfahren nach einem der Ansprüche 1 bis 4, welches umfasst:

- einen Schritt der Berechnung eines Temperaturdifferenzwertes ($\Delta$T) der Einspritzvorrichtung zwischen der Temperatur der Einspritzvorrichtung (T_inj) und dem gewünschten Temperaturwert (T1),
und wobei
der Fluidmengenwert unter Verwendung der Formel

$$M\_inj * Cp\_inj * (T\_inj - T1)$$
$$= Qte\_urée * Cp\_urée * (T\_inj - T\_urée)$$

geschätzt wird, wobei

M_inj einen Massewert der Einspritzvorrichtung bezeichnet,
Cp_inj einen Wärmekapazitätswert der Einspritzvorrichtung bezeichnet,
T_inj den Temperaturwert der Einspritzvorrichtung bezeichnet,
T1 den gewünschten Temperaturwert bezeichnet, Qte_urée eine Menge von Ammoniak umfassendem Fluid bezeichnet,
Cp_urée einen Wärmekapazitätswert des Ammoniak umfassenden Fluids bezeichnet, und
T_urée den empfangenen Temperaturwert des Ammoniak umfassenden Fluids bezeichnet.

7. Verfahren nach einem der Ansprüche 1 bis 6, welches außerdem einen Schritt umfasst, der darin besteht, die Temperatur der Einspritzvorrichtung (T_inj) mit wenigstens einem Schwellenwert (T1, T2) zu vergleichen, und wobei die Einspritzung von weiterem Fluid nur zugelassen wird, falls die Temperatur höher als der Schwellenwert ist.

**Claims**

1. Method for managing an assembly for the aftertreatment of exhaust gases emanating from a motor vehicle combustion engine, the said assembly comprising a system for the catalytic reduction of the nitrogen oxides of the exhaust gases, the said system comprising an injection device for injecting a fluid comprising ammonia into an exhaust line for the exhaust gases, and a catalytic block, situated on the exhaust line, downstream of the injection device in order to store the ammonia emanating from the said injection device in view of a reaction with the nitrogen oxides of the exhaust gases, the method comprising:

   - a step of receiving a value of the temperature of the injection device (T_inj) and a value of the temperature of the fluid comprising ammonia (T_urea),
   - a step of calculating a value of the quantity of fluid (Q_on_injection) as a function of the received temperature values and as a function of a desired value of the temperature of the injection device (T1), and
   - a step of generating a control signal ($C^{inj}$) intended for a device for controlling the injection device, in order to control the injection of the calculated fluid quantity so that the temperature of the injection device reaches the desired temperature,

   **CHARACTERIZED IN THAT**
   it additionally comprises a step of estimating at least one engine control parameter as a function of the calculated fluid quantity value, and **in that** the step of calculating the fluid quantity value is conducted by carrying out a thermodynamic balance in the injection device.

2. Method according to Claim 1, comprising

   - a step of estimating a quantity of nitrogen oxides as a function of the calculated fluid quantity and of the stoichiometric coefficients of at least one expected reaction between the nitrogen oxides and the ammonia in the catalytic block, and
   - a step of evaluating the said at least one engine control parameter as a function of the quantity of nitrogen oxides thus estimated.

3. Method according to either one of Claims 1 and 2, in which the said at least one engine control parameter comprises a quantity of exhaust gases recirculated to the intake and an advance upon injection.

4. Method according to any one of Claims 1 to 3, in which the temperature of the injection device (T_inj) is estimated from a thermodynamic balance of the injection device.

5. Method according any one of Claims 1 to 4, comprising:

   - a step of calculating a value of the difference of temperature ($\Delta T$) of the injection device between the temperature of the injection device (T_inj) and the desired temperature value (T1), and
   - a step of reading from a map a value of the quantity of fluid (Q_on_injection) corresponding to the value of the difference of temperature ($\Delta T$) and the value of the temperature of the urea (T_urea).

6. Method according to any one of Claims 1 to 4, comprising:

   - a step of calculating a value of the difference of temperature ($\Delta T$) of the injection device between the temperature of the injection device (T_inj) and the desired temperature value (T1),

   and in which
   the fluid quantity value is estimated using the formula

$$M\_inj * Cp\_inj * (T\_inj - T1)$$
$$= Qty\_urea * Cp\_urea * (T\_inj - T\_urea)$$

   in which

M_inj represents a mass value of the injection device,
Cp_inj represents a heat capacity value of the injection device,
T_inj represents the received temperature value of the injection device,
T1 represents the desired temperature value,
Qty_urea represents a quantity of fluid comprising ammonia,
Cp_urea represents a heat capacity value of the fluid comprising ammonia, and
T_urea represents the received temperature value of the fluid comprising ammonia.

7. Method according to any one of Claims 1 to 6, additionally comprising a step consisting in comparing the temperature of the injection device (T_inj) with at least one threshold (T1, T2), and in which the injection of an excess of fluid is allowed only if the said temperature is above the said threshold.

# Fig.1

# Fig.2

Fig.3A

Fig.4A

Fig.3B

Fig.4B

Fig.3C

Fig.4C

Fig.3D

Fig.4D

Fig.4E

Fig.3E

Fig.4F

## RÉFÉRENCES CITÉES DANS LA DESCRIPTION

**Documents brevets cités dans la description**

- WO 2012138373 A
- US 20130014496 A
- US 2011047971 A1
- JP 2010223041 B